# EUROPEAN PATENT APPLICATION

(11) **EP 3 536 958 A1**
(43) Date of publication of application: **11.09.2019**
(21) Application number: 19158491.1
(22) Date of filing: 21.02.2019
(51) Int. Cl.: F04C 11/00, H02K 11/40

(54) **ELECTRIC PUMP**

(30) Priority: 06.03.2018 JP 2018039949
(71) Applicant: AISIN SEIKI KABUSHIKI KAISHA, Kariya-shi, Aichi 448-8650 (JP)
(72) Inventor: HOSHIKO, Kazuhiko, Kariya-shi, Aichi 448-8650 (JP)
(74) Representative: Kramer Barske Schmidtchen Patentanwälte PartG mbB

(57) **Abstract**

An electric pump (100) includes: a pump unit (P); a motor unit (M) configured to drive the pump unit; a control unit (D) configured to control driving of the motor unit; and a resin-made housing (3) configured to accommodate the control unit, in which the housing has a housing main (7) body and a cover body (8), the cover body includes, on an inner surface side thereof, a metal portion (41) which entirely covers at least one surface portion (5A) of a control board (5) configuring the control unit, and the metal portion is configured to be groundable.

## Description

### TECHNICAL FIELD

This disclosure relates to an electric pump having a pump unit, a motor unit for driving the pump unit, a control unit for controlling driving of the motor unit, and a housing for accommodating the control unit.

### BACKGROUND DISCUSSION

In the electric pump, a control unit for controlling driving of the motor unit is configured to include a control board on which an electronic component, for example, such as a FET element configuring a switching circuit is mounted. Reference 1 (JP 2016-8526A) discloses the electric pump in which a housing for accommodating the control board is disposed on one end side of a motor housing for accommodating the motor unit.

According to the electric pump disclosed in Reference 1, the housing includes a resin-made housing main body having an opening portion through which the control board is externally visible and a cover body for closing the opening portion. The cover body includes a resin-made frame-shaped portion to be attached to the housing main body by means of thermal welding and a metal-made radiator plate for closing an inner peripheral side of the frame-shaped portion. A band plate-shaped fixing portion to be fastened to a transmission by using a bolt is integrally disposed in the radiator plate by means of welding, and the radiator plate and the control board are electrically connected to each other by a connection member interposed between both of these. In this manner, even if noise is generated on the control board, the control board is grounded via the radiator plate, the fixing portion, and the transmission. Accordingly, the noise flows from the radiator plate to the transmission. As a result, outward emission of the noise generated on the control board is reduced. Therefore, it is possible to prevent a disadvantage that an external device is adversely affected by the noise.

However, according to the electric pump disclosed in Reference 1, the metal-made radiator plate included in the cover body has a structure which is exposed outward. Accordingly, in some cases, the radiator plate is degraded by receiving influence of salt damage, chemicals, or gas from an outer surface thereof. If the radiator plate is degraded, a resistance value of the radiator plate increases, thereby causing a possibility that the control board may be adversely affected or the radiator plate may be damaged by receiving the influence of vibrations or stepping stones. In addition, the cover body has the resin-made frame-shaped portion and the metal-made radiator plate. Accordingly, due to a difference in expansion coefficients of mutually different materials, a gap is sometimes formed between the resin portion and the radiator plate, depending on a temperature. In this case, there is a possibility that moisture may enter the control unit through the gap and the control unit may be adversely affected. Therefore, in the electric pump, there is room for improvement in configuring the housing for accommodating the control unit.

Thus, a need exists for an electric pump capable of effectively reducing outward emission of the noise generated in the control unit while the housing for accommodating the control unit is rationally configured.

### SUMMARY

A feature of an electric pump according to an aspect of this disclosure resides in that the electric pump includes a pump unit, a motor unit configured to drive the pump unit, a control unit configured to control driving of the motor unit, and a resin-made housing configured to accommodate the control unit. The housing has a housing main body and a cover body. The cover body includes, on an inner surface side thereof, a metal portion which entirely covers at least one surface portion of a control board configuring the control unit. The metal portion is configured to be groundable.

According to this configuration, the resin-made housing for accommodating the control unit has the housing main body and the cover body. The inner surface side of the cover body includes the metal portion which covers at least the one entire surface portion of the control board configuring the control unit. The metal portion is configured to be groundable. In this manner, even if noise is generated in an electronic component on the control board, noise can be released from the metal portion toward the ground. Accordingly, the outward emission of the noise generated in the control unit is reduced. As a result, it is possible to prevent the noise from influencing outward of the control unit, and it is possible to improve noise immunity of the control unit.

In addition, a configuration is adopted in which the metal portion which reduces the outward emissions of the noise generated in the control board is located on the inner surface side of the cover body and is not exposed outward. Accordingly, even if the cover body is affected by an external environment, it is possible to prevent a disadvantage that the metal portion may corrode or may be damaged. Furthermore, the surface of the cover body is formed of only the resin. Accordingly, there is little possibility that moisture may enter the control unit from the outside via the cover body.

Another feature of the electric pump according to the aspect of this disclosure resides in that the metal portion has a top surface portion which covers the one surface portion of the control board, and a tubular portion which is erected on a side of the control board from a peripheral edge of the top surface portion, and the tubular portion entirely covers a side portion of the control board.

According to this configuration, the metal portion has the top surface portion and the tubular portion. The top surface portion covers one surface portion of the control board, and the tubular portion covers the entire side portion of the control board. In this manner, the metal portion can reduce the outward emission of the noise generated in the control board by using the tubular portion not only in a site facing the control board but also around the control board. As a result, the noise immunity in the control unit of the electric pump is further improved.

Another feature of the electric pump according to the aspect of this disclosure resides in that the motor unit includes an annular stator and an extension member extending from the stator toward the control board and electrically connected to the stator, and an end portion of the tubular portion and an end portion of the extension member overlap with each other when viewed in a radial direction of the tubular portion.

According to this configuration, the end portion of the tubular portion for covering the entire side portion of the control board in the metal portion, and the end portion of the extension member extending from the stator to the side of the control board and electrically connected to the stator overlap each other in the radial direction of the tubular portion. In this manner, at least one of the tubular portion and the extension member is located around the control board. Accordingly, the outward emission of the noise of the control unit can be more reliably reduced, and the noise immunity in the control unit of the electric pump is further improved.

Another feature of the electric pump according to the aspect of this disclosure resides in that at least one of the end portion of the tubular portion and the end portion of the extension member has an elastic portion which is elastically deformable, and the elastic portion is elastically deformed so that the end portion of the tubular portion and the end portion of the extension member are electrically connected to each other.

According to this configuration, at least one of the end portion of the tubular portion of the metal portion and the end portion of the extension member is elastically deformed, thereby electrically connecting both of these to each other. That is, the metal portion and the extension member are electrically connected to each other. Accordingly, the metal portion can be grounded via the extension member and the stator. Furthermore, if at least one of the end portion of the tubular portion and the end portion of the extension member is the elastically deformable elastic portion, even if a temperature change, vibration, or shock is applied to the electric pump, a connection state between the metal portion and the extension member can be maintained.

Another feature of the electric pump according to the aspect of this disclosure resides in that the electric pump further includes a first connection member that electrically connects the metal portion and a ground pattern of the control board to each other, the motor unit includes a second connection member which electrically connects the stator and the ground pattern of the control board to each other, and the stator is configured to be groundable.

According to this configuration, the metal portion and the ground pattern of the control board are electrically connected to each other by the first connection member. The ground pattern and the stator are electrically connected to each other by the second connection member. The stator can be grounded. Accordingly, the noise generated in the control board can be released to the ground from the metal portion via the first connection member, the ground pattern of the control board, the second connection member, and the stator.

Another feature of the electric pump according to the aspect of this disclosure resides in that the housing includes a coating portion that coats a side of the metal portion which faces the control board, and the coating portion coats an entire region of the metal portion excluding a connection site of the first connection member.

In the control board configuring the control unit, various electronic components are usually arranged on the side facing the cover body for covering the control board. Here, as the electronic component, there may exist a component having a large projecting height from an installation surface of the control board. In this case, the electronic component is likely to move close to the metal portion located on the inner surface side of the cover body, thereby causing a possibility of short circuiting between the metal portion and the electronic component. Therefore, according to this configuration, the housing includes the coating portion for coating the side of the control board of the metal portion, and the coating portion coats the entire region excluding the connection site of the first connection member in the metal portion. In this manner, the metal portion does not move close to the electronic component, and an insulation distance can be secured between the electronic component and the metal portion. As a result, voltage endurance characteristics of the electric pump can be improved.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a longitudinal sectional view illustrating an electric pump according to a first embodiment;
Fig. 2 is a schematic view illustrating a main part according to a second embodiment;
Fig. 3 is a schematic view illustrating a main part according to a third embodiment;
Fig. 4 is a schematic view illustrating a main part according to a fourth embodiment; and
Fig. 5 is a schematic view illustrating a main part according to a fifth embodiment.

### DETAILED DESCRIPTION

Hereinafter, embodiments disclosed here will be described with reference to the drawings.

### First Embodiment

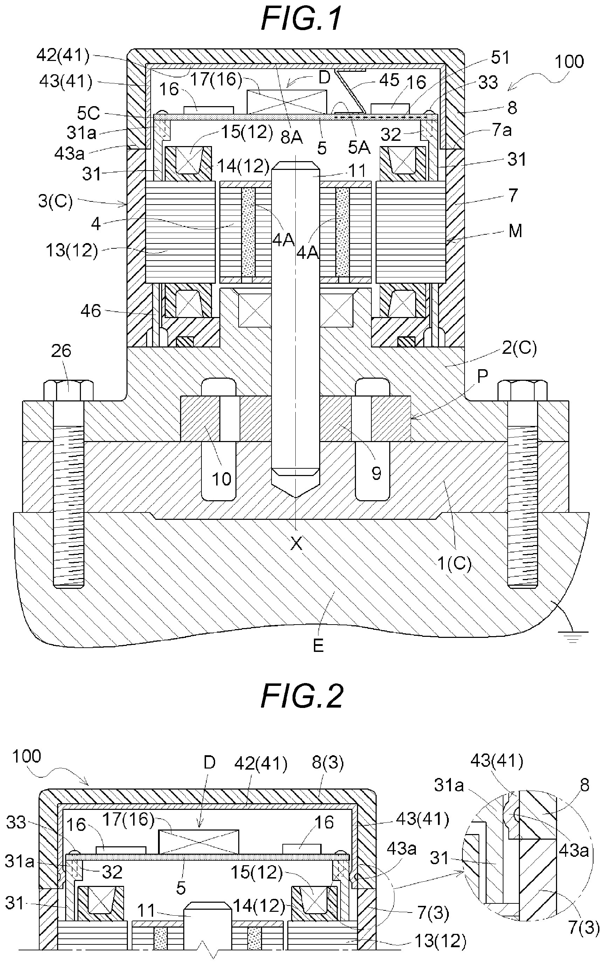

As illustrated in Fig. 1, an electric pump 100 is configured so that a pump unit P, a motor unit M for driving the pump unit P, and a control unit D for controlling driving of the motor unit M are accommodated in a case C. For example, the electric pump 100 is bolted and fixed to a case of a transmission E of a vehicle transmission, and is used in order to pump lubricating oil of the transmission E as hydraulic operating fluid to hydraulic equipment inside a vehicle.

The case C is configured so that a flat base plate 1, a pump housing 2 for accommodating the pump unit P, and a main housing 3 (example of a housing) for accommodating the motor unit M and the control unit D are integrally connected to each other. The base plate 1 and the pump housing 2 are formed of an aluminum alloy. The case C is fixed to the case of the transmission E by using a bolt 26. The transmission E is grounded.

The pump unit P is configured to include a trochoid pump including an inner rotor 9 rotated by a driving force of a shaft 11 and an outer rotor 10 located outside the inner rotor 9. Inside the pump housing 2, the outer rotor 10 is located so as to be freely rotatable together in a state of being eccentric from a rotary shaft core X of the inner rotor 9.

The motor unit M is configured to include a brushless DC motor whose rotation is controlled by the control unit D. The motor unit M includes a shaft 11, a motor rotor 4, and an annular stator 12. The shaft 11 is supported so as to be rotatable around the rotary shaft core X. The motor rotor 4 is rotated integrally with the shaft 11. The stator 12 is accommodated in a region surrounding the motor rotor 4 inside a cylindrical housing main body 7.

The stator 12 includes a stator core 13, an insulator 14, and a coil 15 via a gap outside an outer peripheral surface of the motor rotor 4. The stator core 13 is configured so that electromagnetic steel plates are stacked one on another, and a plurality of salient poles (teeth) are disposed toward the motor rotor 4. The resin-made insulator 14 is mounted on each tooth of the stator core 13 from both end sides in an axial direction. The coil 15 is wound around the insulator 14. The motor rotor 4 has a rotor core including a plurality of permanent magnets 4A inside a stacked structure of the multiple electromagnetic steel plates.

The control unit D for controlling the driving of the motor unit M is configured to include a control board 5. The main housing 3 corresponds to the housing for accommodating the control unit D. The main housing 3 is made of a thermoplastic resin, and includes a housing main body 7 and a cover body 8. The housing main body 7 accommodates the motor unit M, and the cover body 8 is assembled to an opening end portion 7a on a side of the housing main body 7 which is opposite to the pump housing 2. The control board 5 is accommodated inside a space surrounded by the housing main body 7 and the cover body 8.

In addition to a power control element, a capacitor, and a resistor, an electronic component 16 such as a FET element 17 of a switching circuit for determining a power control timing is mounted on the control board 5. The control unit D functions to generate a rotating magnetic field by sequentially supplying electric power to the coil 15, and controls rotation speed of the motor rotor 4 by controlling a rotation speed of the rotating magnetic field.

The housing main body 7 and the cover body 8 are joined to each other through welding (for example, hot plate welding, ultrasonic welding, vibration welding, or infrared welding) by heating and pressurizing resins. The cover body 8 has a ventilation hole (not illustrated) through which an external space and an internal space of the main housing 3 communicate with each other. In this manner, the ventilation hole adjusts a pressure difference between the internal space and the external space of the housing main body 7 which is caused by a rapid temperature change of the motor unit M under an environment of using the electric pump 100. A filter (not illustrated) for covering the ventilation hole is fixed to an inner surface of the cover body 8. The ventilation hole blocks moisture and allows only air to pass therethrough by using the filter.

The cover body 8 includes a metal portion 41 which covers at least one entire surface portion 5A of the control board 5 on an inner surface side 8A. The metal portion 41 has a top surface portion 42 for covering the one surface portion 5A of the control board 5 and a tubular portion 43 erected from a peripheral edge of the top surface portion 42 to a side of the control board 5. The tubular portion 43 is formed so as to cover an entire side portion 5C of the control board 5. The metal portion 41 is formed of a metal material such as an aluminum alloy, iron, and copper.

A connection member 45 (example of a first connection member) for electrically connecting the metal portion 41 and the control board 5 to each other is provided between the metal portion 41 and the control board 5. The connection member 45 is formed of a metal material which is the same as that of the metal portion 41. For example, the connection member 45 is formed in a Z-shape in a side view so as to reliably come into contact with the metal portion 41 and the ground pattern 51 of the control board 5, and is configured to be elastically deformable.

The motor unit M has an extension member 31 extending from the stator core 13 of the stator 12 to the side of the control board 5 and electrically connected to the stator core 13 (stator 12). The extension member 31 is formed of a metal material which is the same as that of the metal portion 41. For example, the extension member 31 is formed in a tubular shape, and has a plurality of fastening portions 32 for fixing the control board 5 to one end on the side of the control board 5. The control board 5 is screwed and fixed to the fastening portion 32 by using a metal-made screw member 33. The ground pattern 51 disposed in the control board 5 and the extension member 31 are electrically connected to each other via the screw member 33 fixed to the fastening portion 32. The extension member 31 and the screw member 33 correspond to a second connection member for electrically connecting the stator 12 and the control board 5 to each other. In the present embodiment, as illustrated in Fig. 1, an end portion 43a of the tubular portion 43 of the metal portion 41 and an end portion 31a of the extension member 31 on the side of the control board 5 overlap each other when viewed in the radial direction of the tubular portion 43.

A connection member 46 for electrically connecting the stator 12 and the pump housing 2 to each other is provided between the stator 12 and the pump housing 2. The connection member 46 is formed of a metal material which is the same as that of the metal portion 41. In this manner, the metal portion 41 has a conduction path connected to the pump housing 2 via the connection member 45, the ground pattern 51 of the control board 5, the extension member 31, the stator 12, and the connection member 46. The metal portion 41 is configured to be electrically groundable. The pump housing 2 is electrically connected to the transmission E grounded by using a bolt 26. Accordingly, even if noise is generated in the electronic component 16 on the control board 5, the noise can be released to the ground from the metal portion 41 via the transmission E. Accordingly, outward emission of the noise generated in the control unit D is reduced. As a result it is possible to prevent the noise from influencing outward of the control unit D, and it is possible to improve noise immunity of the control unit D.

In addition, according to the present embodiment, the metal portion 41 has the top surface portion 42 and the tubular portion 43. The top surface portion 42 covers the one surface portion 5A of the control board 5, and the tubular portion 43 covers the entire side portion 5C of the control board 5. In this manner, the metal portion 41 can reduce the outward emission of the noise by using the tubular portion 43 not only in a site facing the control board 5 but also around the control board 5.

Furthermore, according to the present embodiment, the end portion 43a of the tubular portion 43 of the metal portion 41 and the end portion 31a of the extension member 31 overlap each other when viewed in the radial direction of the tubular portion 43. In this manner, at least one of the tubular portion 43 and the extension member 31 is located around the control board 5. Accordingly, the outward emission of the noise of the control unit D can be more reliably reduced, and the noise immunity in the control unit D of the electric pump 100 is further improved.

### Second Embodiment

Fig. 2 illustrates a second embodiment of the electric pump 100.

According to the second embodiment, as illustrated in Fig. 2, unlike the first embodiment, the connection member 45 is not disposed between the metal portion 41 and the control board 5. The end portion 43a of the tubular portion 43 of the metal portion 41 and the end portion 31a of the extension member 31 are electrically connected to each other. At least any one of the end portion 43a of the tubular portion 43 and the end portion 31a of the extension member 31 may have an elastically deformable elastic portion. In an example illustrated in Fig. 2, the end portion 43a of the tubular portion 43 is configured to serve as the elastically deformable elastic portion.

In this way, if at least one of the end portion 43a of the tubular portion 43 and the end portion 31a of the extension member 31 is the elastically deformable elastic portion, even if a temperature change, vibration, or shock is applied to the electric pump 100, a connection state between the metal portion 41 and the extension member 31 can be maintained. In this way, the metal portion 41 and the extension member 31 are electrically connected to each other, thereby forming a conduction path connected from the metal portion 41 to the pump housing 2 via the extension member 31, the stator 12, and the connection member 46. The metal portion 41 is configured to be electrically groundable. As a result, the noise generated in the control board 5 can be released from the metal portion 41 to the ground via the transmission E.

### Third Embodiment

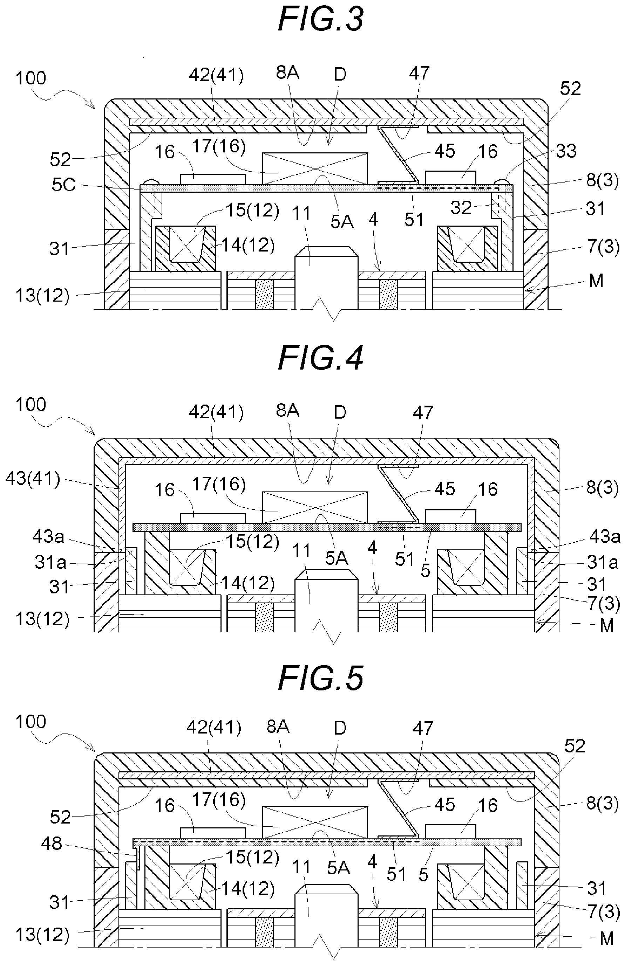

Fig. 3 illustrates a third embodiment of the electric pump 100.

In the control board 5 configuring the control unit D, various electronic components 16 are usually arranged on the side facing the metal portion 41. Here, as the electronic component 16, there may exist a component (for example, the FET element 17 illustrated in Fig. 3) having a large projecting height from an installation surface (surface portion 5A) of the control board 5. In this case, the electronic component 16 is likely to move close to the metal portion 41, thereby causing a possibility of short-circuiting between the metal portion 41 and the electronic component 16. Therefore, according to the present embodiment, as illustrated in Fig. 3, the cover body 8 includes a coating portion 52 for coating a side of the metal portion 41 which faces the control board 5. The coating portion 52 is configured to coat an entire region of the metal portion 41 excluding a connection site 47 of the connection member 45. According to the present embodiment, the metal portion 41 is formed in a plate shape having only the top surface portion 42. Other configurations are the same as those according to the first embodiment.

As in the present embodiment, the cover body 8 includes the coating portion 52. Accordingly, the metal portion 41 does not move close to the electronic component 16 on the control board 5. Therefore, an insulation distance can be secured between the electronic component 16 and the metal portion 41. As a result, voltage endurance characteristics of the electric pump 100 can be improved.

### Fourth Embodiment

Fig. 4 illustrates a fourth embodiment of the electric pump 100.

According to the fourth embodiment, as illustrated in Fig. 4, the electric pump 100 is formed so that the metal portion 41 has the top surface portion 42 and the tubular portion 43. The connection member 45 for electrically connecting the metal portion 41 and the control board 5 to each other is provided between the metal portion 41 and the control board 5. The end portion 43a of the tubular portion 43 of the metal portion 41 and the end portion 31a of the extension member 31 are electrically connected to each other. Unlike the first to third embodiments, the control board 5 is supported by and fixed to a resin portion (for example, an insulator 14) of the motor unit M. In this manner, a conduction path connected from the metal portion 41 to the pump housing 2 via the extension member 31, the stator 12 (stator core 13), and the connection member 46 is formed. The metal portion 41 is configured to be electrically groundable. As a result, the noise generated in the control board 5 can be released from the metal portion 41 to the ground via the transmission E. In addition, the metal portion 41 and the control board 5 are electrically connected to each other by the connection member 45. Accordingly, for example, when static electricity is generated in the control board 5, the static electricity can be released from the metal portion 41 to the ground via the transmission E.

### Fifth Embodiment

Fig. 5 illustrates a fifth embodiment of the electric pump 100.

According to the fifth embodiment, as illustrated in Fig. 5, the electric pump 100 is formed so that the metal portion 41 has only the top surface portion 42. The connection member 45 is provided between the metal portion 41 and the ground pattern 51 of the control board 5. The connection member 48 is located between the control board 5 and the end portion 31a of the extension member 31. The connection member 48 is electrically connected to the ground pattern 51 of the control board 5 and the extension member 31. According to the present embodiment, the connection member 48 and the extension member 31 correspond to the second connection member for electrically connecting the ground pattern 51 of the control board 5 and the stator 12 (stator core 13) to each other. Similar to the fourth embodiment, the control board 5 is supported by and fixed to the resin portion (for example, the insulator 14) of the motor unit M. In this manner, a conduction path connected from the metal portion 41 to the pump housing 2 via the connection member 45 (first connection member), the ground pattern 51 of the control board 5, the connection member 48, the extension member 31 (second connection member), the stator 12 (stator core 13), and the connection member 46 is formed. The metal portion 41 is configured to be electrically groundable. As a result, the noise generated in the control board 5 can be released from the metal portion 41 to the ground via the transmission E.

### Other Embodiments

(1) In the above-described respective embodiments, an example has been described in which the metal portion 41 or the control board 5 is electrically connected to the pump housing 2 via the extension member 31, the stator core 13, and the connection member 46. Instead of this configuration, for example, a configuration may be adopted as follows. One metal member disposed on an outer peripheral side or an inner peripheral side of the stator core 13 and extending to the side of the control board 5 and the side of the pump housing 2 is located between the metal portion 41 or the control board 5 and the pump housing 2. The metal portion 41 or the control board 5 and the pump housing 2 are electrically connected to each other by the metal member.
(2) In the above-described respective embodiments, an example has been described which includes the connection member 46 for electrically connecting the stator 12 and the pump housing 2 to each other. However, the connection member 46 may be disposed as a portion of the pump housing 2.
(3) In the above-described respective embodiments, an example has been described in which the noise generated in the control board 5 is released from the transmission E to the ground. Instead of the above-described configuration, for example, a configuration may be adopted as follows. A ground line (not illustrated) of a cable which supplies electric power to the control unit D or communicates with a host ECU and the ground pattern 51 of the control board 5 are electrically connected to each other via a connector (not illustrated). In this manner, even if the electric pump 100 is not fixed to the case of the transmission E, the noise generated in the control board 5 can be released from the metal portion 41 to the ground via the connection member 45, the ground pattern 51 of the control board 5, the connector, and the ground line.

The embodiments disclosed here can be widely used for the electric pump having the pump unit, the motor unit, the control unit, and the housing.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An electric pump (100) comprising:
a pump unit (P);
a motor unit (M) configured to drive the pump unit;
a control unit (D) configured to control driving of the motor unit; and
a resin-made housing (3) configured to accommodate the control unit,
wherein the housing has a housing main (7) body and a cover body (8),
the cover body includes, on an inner surface side thereof, a metal portion (41) which entirely covers at least one surface portion (5A) of a control board (5) configuring the control unit, and
the metal portion is configured to be groundable.

2. The electric pump according to claim 1,
wherein the metal portion has a top surface portion (42) which covers the one surface portion of the control board, and a tubular portion (43) which is erected on a side of the control board from a peripheral edge of the top surface portion, and
the tubular portion entirely covers a side portion of the control board.

3. The electric pump according to claim 2,
wherein the motor unit includes an annular stator (12) and an extension member (31) extending from the stator toward the control board and electrically connected to the stator, and
an end portion (43a) of the tubular portion and an end portion (31 a) of the extension member overlap with each other when viewed in a radial direction of the tubular portion.

4. The electric pump according to claim 3,
wherein at least one of the end portion of the tubular portion and the end portion of the extension member has an elastic portion which is elastically deformable, and the elastic portion is elastically deformed so that the end portion of the tubular portion and the end portion of the extension member are electrically connected to each other.

5. The electric pump according to any one of claims 1 to 3, further comprising:
a first connection member (45) that electrically connects the metal portion and a ground pattern (51) of the control board to each other,
wherein the motor unit includes a second connection member (48) which electrically connects the stator and the ground pattern of the control board to each other, and
the stator is configured to be groundable.

6. The electric pump according to claim 5,
wherein the housing includes a coating portion (52) that coats a side of the metal portion which faces the control board, and
the coating portion coats an entire region of the metal portion excluding a connection site of the first connection member.
